# EUROPEAN PATENT APPLICATION

(11) **EP 2 952 404 A1**
(43) Date of publication of application: **09.12.2015**
(21) Application number: 14171199.4
(22) Date of filing: 04.06.2014
(51) Int. Cl.: B61D 17/02

(54) **Bogie and associated structure**

(71) Applicant: Hitachi, Ltd., Tokyo (JP)
(72) Inventor: Morita, Kiyoshi, Chiyoda-ku, Tokyo 100-8280 (JP); Alcino, Paulo, London, Greater London NW8 7HY (GB)
(74) Representative: Gill, Stephen Charles

(57) **Abstract**

A railway vehicle includes: a vehicle body, a bogie supporting the body and having a bogie frame (4) and wheels (2). The railway vehicle further includes a bogie enclosure structure which substantially encloses the bogie in a cavity beneath the vehicle body. The enclosure structure has two side covers (12) which cover respective external lateral sides of the bogie. The enclosure structure further has a bottom cover covering a bottom side of the bogie. Wheel holes (111, 111') are formed in the bottom cover for bottom portions of the wheels to project through. First (101a, 101a', 121a) and second (101b, 101b', 121b) air holes are formed in the enclosure structure, the first air hole being located at a forward position, and the second air hole being located at a rearward position. Forward motion of the vehicle produces a cooling air flow which enters the cavity through the first air hole and exits the cavity through the second air hole.

## Description

### Field of the Invention

The present invention relates to a structure associated with a bogie of a railway vehicle

### Background of the Invention

Reduction of energy consumption during the operation of railway rolling stock is becoming increasingly important for environmental and cost-saving reasons. Rail networks already compare favourably as low energy consumption transportation systems compared with other systems such as road vehicle, air travel. However, further reductions in energy consumption are desirable.

When trains are running, substantial amounts of energy are consumed to overcome running resistance, and for high speed trains especially aerodynamic resistance is dominant part of the overall running resistance. To reduce aerodynamic resistance, features such as a long nose, side skirts, reduced gap widths etc. are already used. However, because trains generally need to be able to run on curved track, space has to be provided to allow a train's bogies to rotate. The cavities which provide this space increase the aerodynamic resistance around the bogies.

### Summary of the Invention

It would be desirable to reduce aerodynamic resistance caused by a bogie cavity, and one approach for achieving this can be to provide an enclosure around the cavity. However, a problem can then arise that it becomes difficult to properly cool equipment installed at the bogie, as the equipment is shielded from the external air by the enclosure.

Accordingly, in a first aspect, the present invention provides a railway vehicle including:
a vehicle body;
a bogie supporting the body and having a bogie frame and wheels; and
a bogie enclosure structure which substantially encloses the bogie in a cavity beneath the vehicle body, the enclosure structure having two side covers which cover respective external lateral sides of the bogie, and the enclosure structure further having a bottom cover covering a bottom side of the bogie, wheel holes being formed in the bottom cover for bottom portions of the wheels to project through;
wherein first and second air holes are formed in the enclosure structure, the first air hole being located at a forward position, and the second air hole being located at a rearward position, such that forward motion of the vehicle produces a cooling air flow which enters the cavity through the first air hole and exits the cavity through the second air hole.

By adopting the bogie enclosure structure it is possible to reduce the aerodynamic resistance of the vehicle. Another advantage of enclosing the bogie in this way is that the amount of noise produced by the vehicle can be reduced. However, by providing the air holes (which unlike the wheel holes are not blocked by wheels projecting therethrough), an air flow can still be generated which can be used to cool equipment installed at the bogie.

The railway vehicle of the first aspect may have any one or, to the extent that they are compatible, any combination of the following optional features.

The first air hole may be located at or adjacent one of the lateral sides of the bogie, and the second air hole may be located at or adjacent the other lateral side of the bogie, such that the cooling air flow passes substantially diagonally across the cavity. In this way, the cooling air flow can be directed to equipment located substantially centrally on the bogie. Further, the diagonal path of the air flow can help to induce secondary circulating air flows in the cavity. These secondary air flows can also be used for equipment cooling.

The railway vehicle may include a traction motor for driving the wheels. The traction motor may be mounted to the bogie frame such that it is located on or proximal to the path of the cooling air flow through the cavity. For example, the bogie may have a front pair of wheels and a rear pair of wheels. One or more traction motors for the wheels may be mounted at a central position of the bogie frame, where they can be cooled by the diagonal cooling air flow. Bearings for one of the front pair of wheels closest to the first air hole and one of the rear pair of wheels closest to the second air hole can also be cooled by the diagonal cooling air flow. Bearings for the other of the front pair of wheels and the other of the rear pair of wheels can then be cooled by secondary air flows induced by the diagonal cooling air flow.

The enclosure structure may have respective diffusers inside the first and second air holes, the diffusers guiding the cooling air flow into and out of the cavity. The diffusers can improve the passage of the cooling air flow through the cavity, allowing more efficient use to be made of the air flow.

Respective noise-reducing baffles, such as perforated plates, can cover the first and second air holes. This can help to reduce the transmission of noise from through the air holes.

The first and second air holes can be formed in the side covers, i.e. typically with the first air hole in one side cover and the second air hole in the other side cover. However, with such an arrangement, any noise transmitted through the air holes may tend to project laterally from the vehicle. Thus another option is to form the first and second air holes in the bottom cover. With this arrangement, any noise transmitted through the air holes tends to project in a downwards direction onto the track.

The enclosure structure is preferably configured to allow the bogie to rotate relative to the vehicle body. One way of achieving this is to over-size the wheel holes so that even when the bogie rotates, the wheels do not interfere with the sides of the holes. However, oversizing the holes can have a detrimental impact on aerodynamic resistance and produced noise. Thus another option is for the bottom cover to have front and rear portions, and further to have a central portion in which the wheel holes are formed, the front and rear portions being fixed to the vehicle body, and the central portion being fixed to and rotatable with the bogie such that the central portion rotates relative to the front and rear portions. The wheel holes then do not need to be over-sized.

When the bottom cover has front, rear and central portions, the first and second air holes may be respectively formed in the front and rear portions. Although it is advantageous to provide these air holes so that a cooling air flow can be generated in the bogie cavity, the use of such a bottom cover has wider applicability. For example, it may be desirable to reduce the aerodynamic resistance and/or to reduce noise production in a situation where any equipment installed at the bogie does not require the cooling air flow generated by the air holes (for example, because an alternative cooling solution is provided or the cooling requirement of the equipment is low).

Accordingly, in a second aspect, the present invention provides a railway vehicle including: a vehicle body;
a bogie which supports the body and is rotatable relative thereto, the bogie having a bogie frame and wheels; and
a bogie enclosure structure which substantially encloses the bogie in a cavity beneath the vehicle body, the enclosure structure having two side covers which cover respective external lateral sides of the bogie, and the enclosure structure further having a bottom cover covering a bottom side of the bogie, wheel holes being formed in the bottom cover for bottom portions of the wheels to project through;
wherein the bottom cover has front and rear portions, and further has a central portion in which the wheel holes are formed, the front and rear portions being fixed to the vehicle body, and the central portion being fixed to and rotatable with the bogie such that the central portion rotates relative to the front and rear portions.

Advantageously, such an enclosure structure can allow the bogie to rotate while also helping to reduce aerodynamic resistance and noise production.

The railway vehicle of the second aspect or the railway vehicle of the first aspect in which the bogie is rotatable and the bottom cover has the front, central and rear portions may have any one or, to the extent that they are compatible, any combination of the following optional features.

The front and rear portions may be separate components spaced from each other by the central portion. However, another option is to form the front and rear portions as joined components or even as a unitary component. The central portion may then be formed as a circular component entirely surrounded to front, rear and sides by the front and rear portions.

Conveniently, the central portion may adjoin the front and rear portions along respective circular arc boundaries. The shape of these boundaries can allow the central portion to rotate relative to the front and rear portions without gaps opening at the boundaries.

The central portion may be fixed to the bogie at a central part of the bogie frame. For example, the frame may have a centrally-positioned protection cover at its base, and the central portion can conveniently be fixed to that cover.

The central portion may be formed of polymer-matrix fibre-reinforced composite. Particularly if the central portion is only fixed to the bogie at one location (for example, at the centre of the central portion), there can be significant unsupported (for example, peripheral) areas of the central portion. However, forming the central portion from polymer-matrix fibre-reinforced composite enables a light but strong and stiff construction that helps to prevent unwanted movement and distortion of these areas. The composite may be glass and/or carbon fibre reinforced composite.

### Brief Description of the Drawings

Embodiments of the invention will now be described by way of example with reference to the accompanying drawings in which:
Figure 1 shows a side view of an unenclosed bogie;
Figure 2 shows a bottom view of the bogie of Figure 1;
Figure 3 shows air flow across the bogie on the side view of Figure 1;
Figure 4 shows a side view of a bogie with an enclosure structure;
Figure 5 shows a bottom view of the bogie of Figure 4;
Figure 6 shows the bottom view of Figure 5 when the bogie rotates;
Figure 7 shows a cross-section along line A-A of Figure 5;
Figure 8 shows air flow across the bogie on the cross-section of Figure 6;
Figure 9 shows air flows across the bogie on the bottom view of Figure 5;
Figure 10 shows air flows across the bogie on a bottom view of a bogie having a first variant enclosure structure;
Figure 11 shows a bottom view of a bogie having a second variant enclosure structure;
Figure 12 shows a bottom view of a bogie having a third variant enclosure structure;
Figure 13 shows a side view of a bogie having a fourth variant enclosure structure; and
Figure 14 shows air flows across the bogie of Figure 13 on a bottom view thereof.

### Detailed Description and Further Optional Features of the Invention

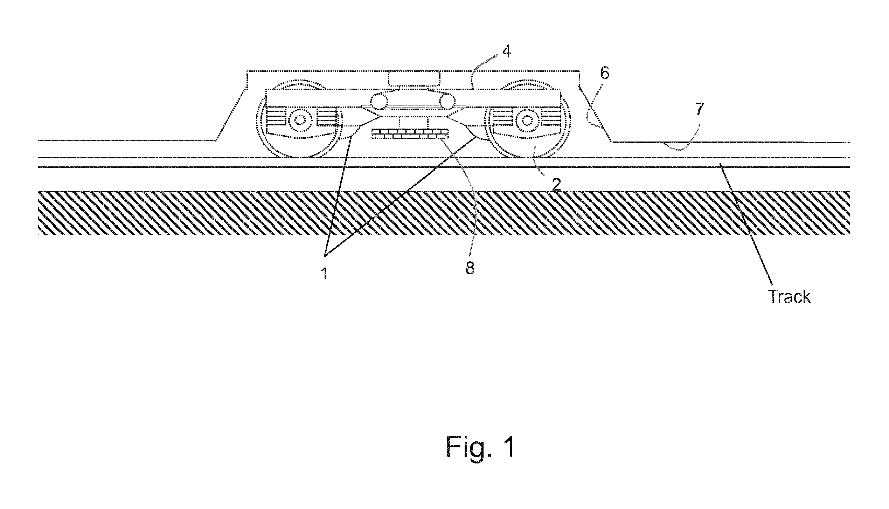

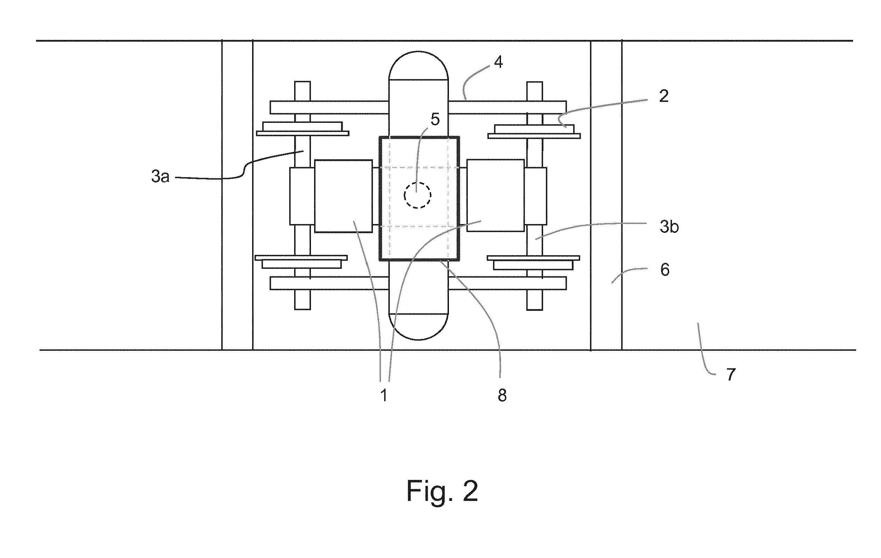

Figure 1 shows a side view of an unenclosed bogie which supports a railway vehicle on a railway track, and Figure 2 shows a bottom view of the bogie. The bogie includes wheels 2, wheel axles 3a, 3b, and a bogie frame 4. A pair of traction motors 1 and a protection cover 8 are mounted on the frame. When the vehicle runs along curved track, the bogie is able to rotate relative to the body of the railway vehicle around a central pin 5. Each traction motor 1 drives a respective axle 3a, 3b and is conveniently located close to the axle between the right side and left side wheels of the axle.

To allow the bogie to rotate relative to the vehicle body, the bogie is located in an over-sized cavity at the underside 7 of the body. The cavity provides space for the rotation around the central pin 5. In particular, the underside walls 6 of the vehicle body to front and rear of the bogie incline away from the bogie to make sufficient space.

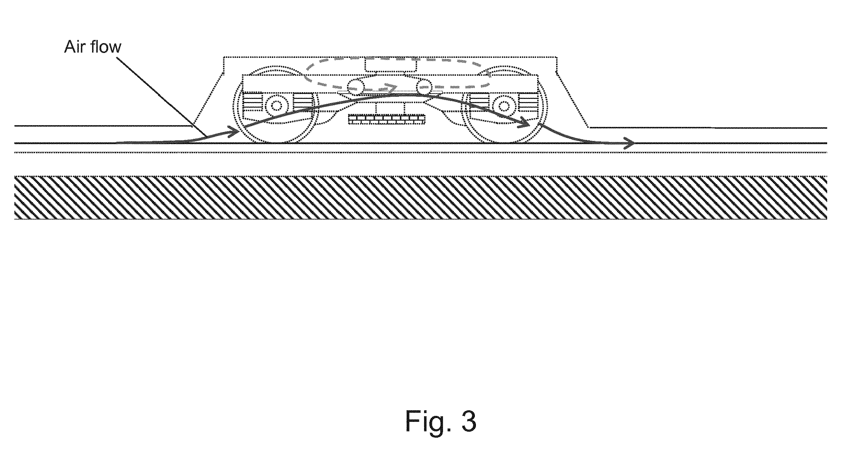

Figure 3 shows air flow across the bogie on the side view of Figure 1. A large volume of flow, indicated by the solid arrowed line, is pulled into the bogie cavity by the forward motion of the vehicle. This primary flow induces secondary circulating flows indicated by the dashed arrowed line. Both the primary and secondary air flows can cool the traction motors 1. However, because the bogie does not have a particularly streamlined shape, the primary air flow produces significant aerodynamic resistance. Also the unenclosed bogie produces substantial amounts of aerodynamic noise.

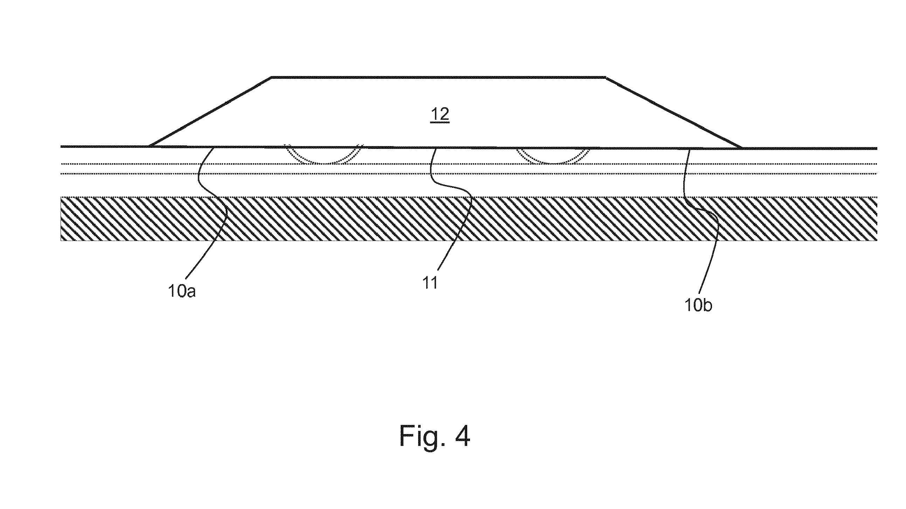

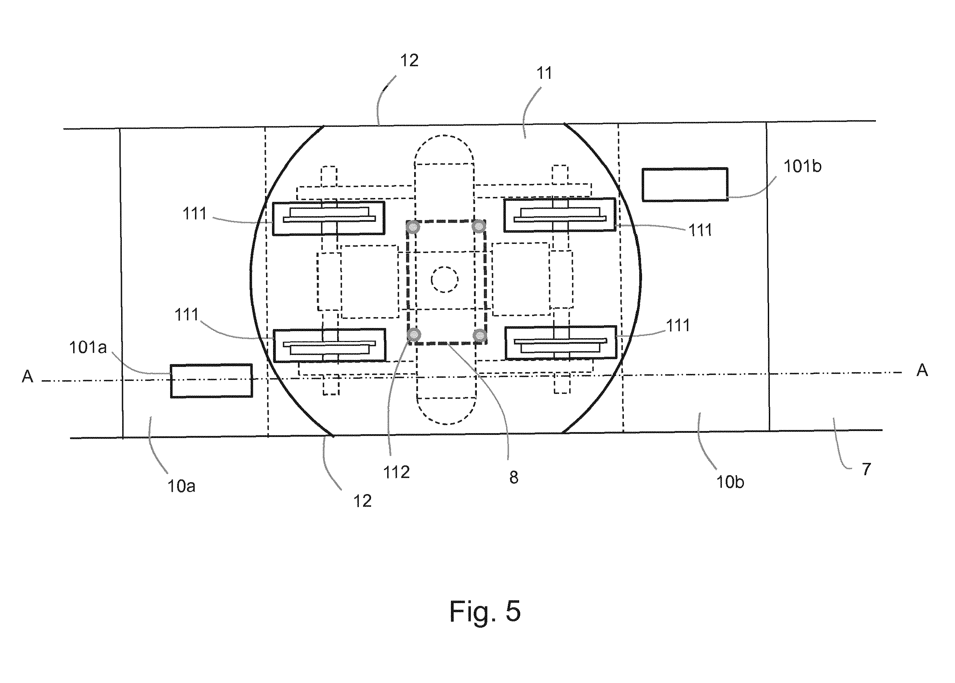

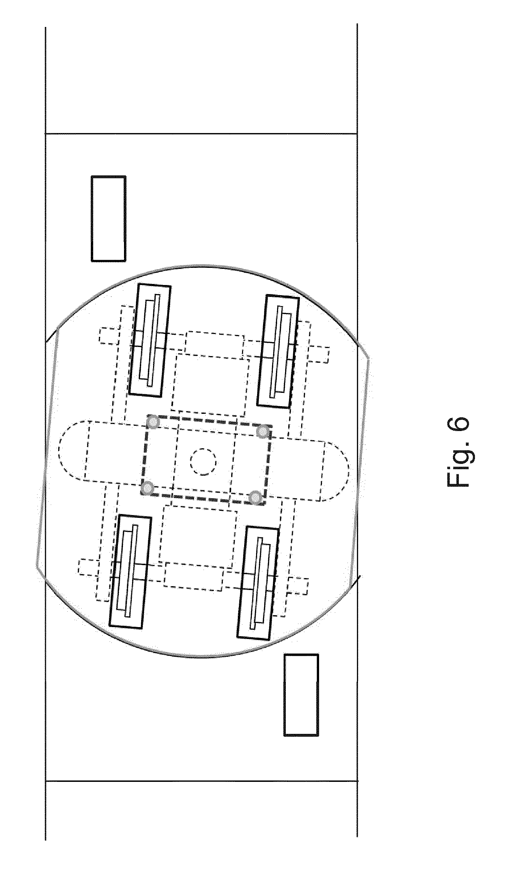

Figures 4 and 5 show respectively side and bottom views of a bogie with an enclosure structure, and Figure 6 shows a cross-section along A-A of Figure 5. The enclosure structure addresses the problems of aerodynamic resistance and noise production, while also providing a cooling air flow for the bogie. It does this by having bottom and side covers for the bogie cavity which reduce the amount of air flow entering the cavity and serve as a shield against noise produced by the bogie, but providing two air holes in the structure so that motion of the vehicle produces a cooling air flow which enters the cavity through the first air hole and exits the cavity through the second air hole.

More particularly, the cavity around the bogie is enclosed by side covers 12 at left and right lateral sides of the bogie, and a bottom cover at the underside of the bogie. The bottom cover is divided into a first bottom panel 10a, a second bottom panel 10b and a central bottom panel 11. The first and second panels 10a, 10b cover the front and rear ends of the cavity, while the central bottom panel 11 locates therebetween and has wheel holes 111 through which the bottom portions of the wheels project onto the track. The first bottom panel 10a has an air hole 101 a for intake or discharge of air (depending on the direction of movement of the vehicle) at one side of the vehicle, and the second bottom panel 10b also has an air hole 101 b for the other of air intake or discharge at the other side of the vehicle.

The side panels 12 and the first and second bottom panels 10a, 10b are fixed to the vehicle body. By contrast, the central bottom panel 11 is fixed to the bogie so that it rotates with the bogie. For example, the central bottom panel 11 can be fixed with bolts 112 to equipment mounted on the bogie, such as the protection cover 8. The central bottom panel 11 closely adjoins to the first and second bottom panels 10a, 10b along respective circular arc boundaries. Peripheral areas of the central bottom panel 11 can be at substantial distances from the fixing bolts 112. Thus to reduce distortion of these areas, it is preferable to form at least this panel from polymer-matrix fibre-reinforced composite due to its combination of lightness, stiffness and strength.

Figure 6 shows the bottom view of Figure 5 when the bogie rotates, for example when the vehicle runs along curved track. Because the central bottom panel 11 is fixed to bogie, the panel 11 rotates with the bogie. Accordingly, the panel 11 does not require large wheel holes 111 to accommodate the movement of the wheels, which helps to reduce aerodynamic losses and noise production. The circular arc boundaries between the central bottom panel 11 and the first and second bottom panels 10a, 10b prevent gaps opening up between the panels during the rotation.

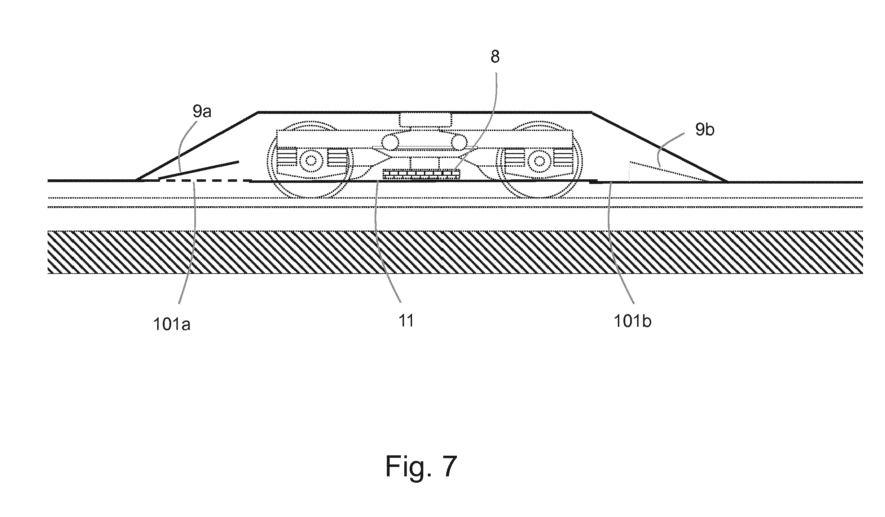

Figure 7 shows a cross-section along line A-A of Figure 5. The air hole 101 a of the first bottom panel 10a has a diffuser 9a located inside the hole to guide the air flow through the hole and reduce aerodynamic losses. The air hole 101 b of the second bottom panel 10b has a similar diffuser 9b located at its inside.

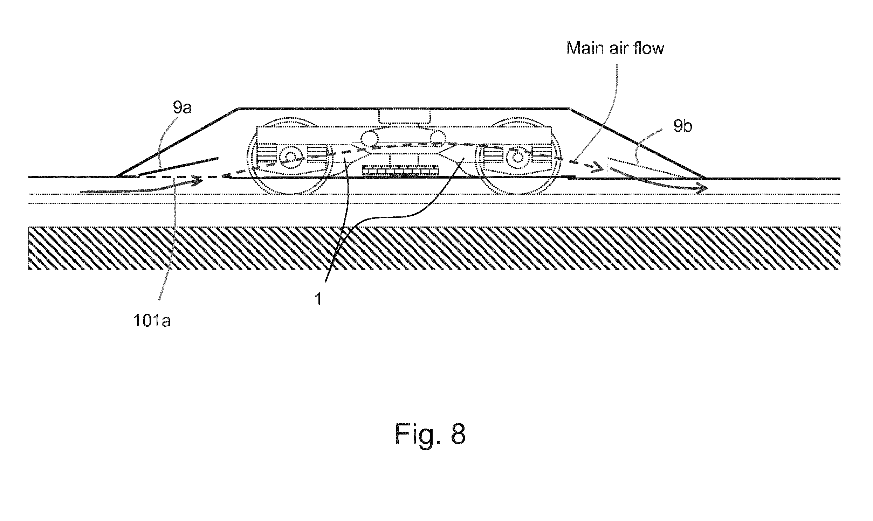

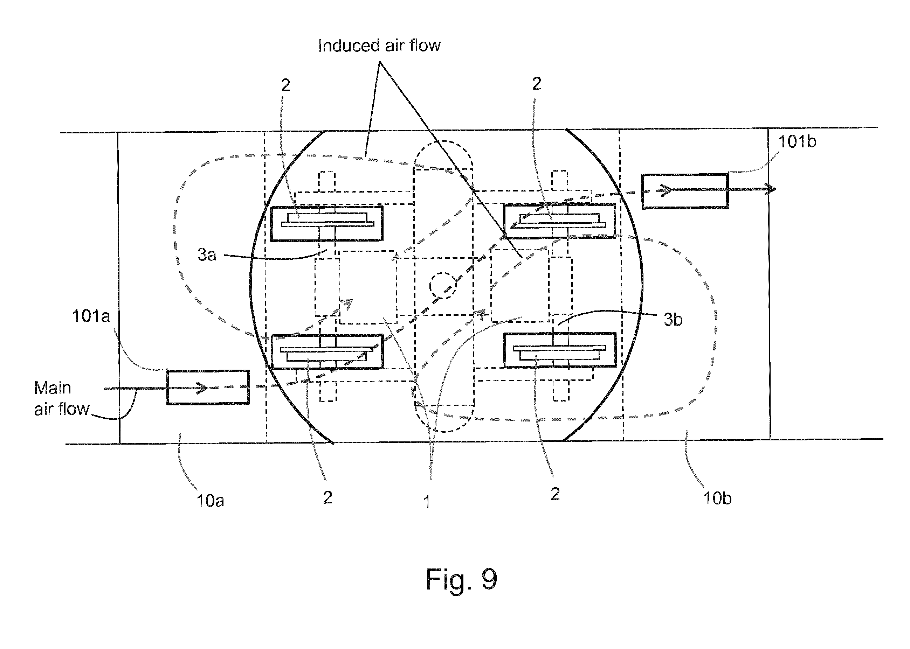

Figures 8 and 9 show the air flows across the bogie. A main air flow produced when the vehicle is running flows into the bogie cavity via air hole 101 a, and flows out from the cavity via air hole 101 b. When the vehicle runs in the opposite direction, the direction of air flow is reversed. The main air flow follows a diagonal path which passes through: a region in which one of the wheels 2 of front axle 3a is located, a central region in which the traction motors 1 are located, and a region on the other side of the vehicle in which one of the wheels 2 of rear axle 3b is located. The main flow also induces secondary air flows, one secondary air flow circulating around the wheel 2 of front axle 3a not on the path of the main air flow, and another secondary air flow circulating around the wheel 2 of rear axle 3b not on the path of the main air flow.

The traction motors 1 heat up during running and require cooling. Other equipment located at the bogie, such as axle bearings, also require cooling. However, the main air flow described above can effectively cool the traction motors 1 and the axle bearings for two of the wheels 2, while the secondary air flows can cool the axle bearings for the other two wheels 2. Thus the bogie enclosure structure can reduce aerodynamic resistance and noise production while also allowing air cooling of equipment located at the bogie.

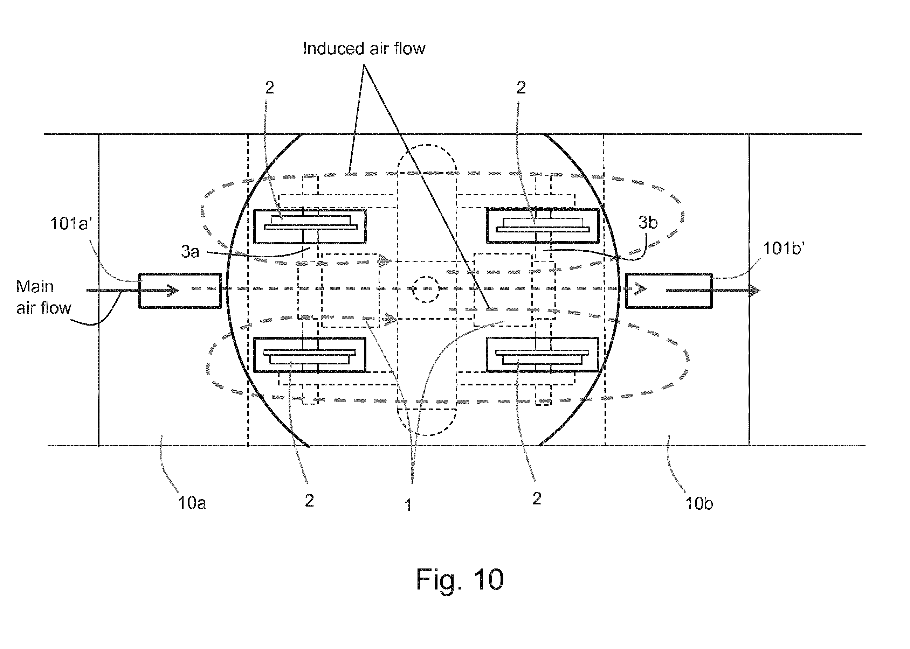

Figure 10 shows air flows across the bogie on a bottom view of a bogie having a first variant enclosure structure. The structure is the same as that of Figures 4 to 9 except that the two air holes 101 a', 101 b' formed in the first 10a and second 10b bottom panels are located on the centre line of the vehicle rather than being offset to respective sides. The air holes 101 a', 101 b' may have respective diffusers.

The main air flow produced when the vehicle is running still flows into the bogie cavity via air hole 101 a', and flows out from the cavity via air hole 101 b', but the path of this air flow is now also along the centre line of the vehicle. The main air flow is thus very effective at cooling the traction motors 1, but being equidistant from the wheels can be less effective at cooling the axle bearings. The main air flow does induce secondary air flows, one circulating around the wheels 2 at one side of the vehicle, and the other circulating around the wheels 2 at the opposite side of the vehicle. However, although these secondary air flows are suitable positioned for cooling the axle bearings, being longer and narrower they are generally weaker than the secondary air flows induced when the main air flow follows a diagonal path. Thus the overall cooling effectiveness of the combined air flows may be reduced.

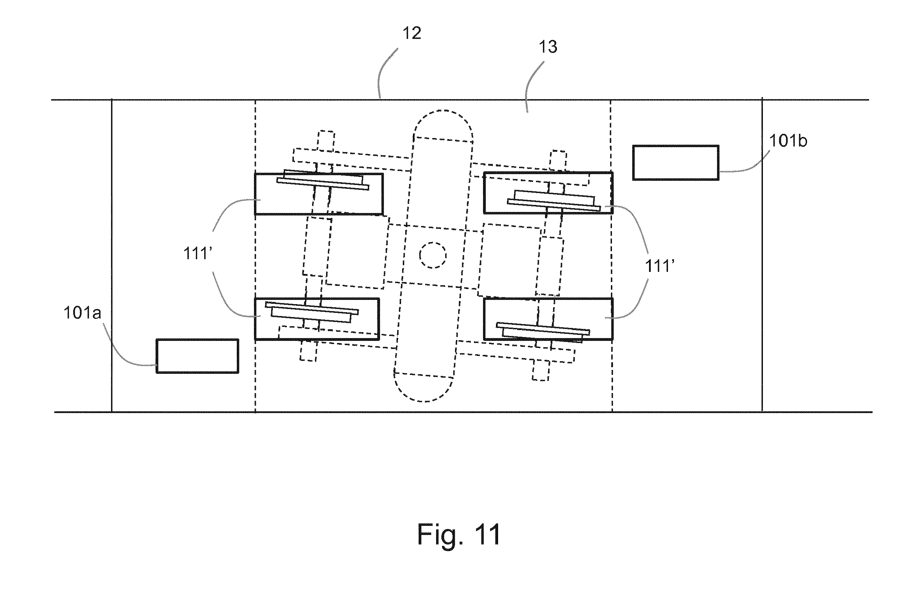

Figure 11 shows a bottom view of a bogie having a second variant enclosure structure. The structure is the same as that of Figures 4 to 9 except that the central bottom panel is fixed to the vehicle body and does not rotate with the bogie. Conveniently, the bottom cover of the second variant can be thus formed as a single panel 13, instead of from three separate panels. The bottom cover is thus much simplified, bringing cost, manufacture and mechanical advantages. However, in order to allow the bogie to rotate when the vehicle travels around a curve, the wheel holes 111' are oversized needed to prevent interference between the wheels 2 and the panel 13. Accordingly, the amount of air flow into and out of the wheel holes 111' is increased, leading to increases in aerodynamic resistance.

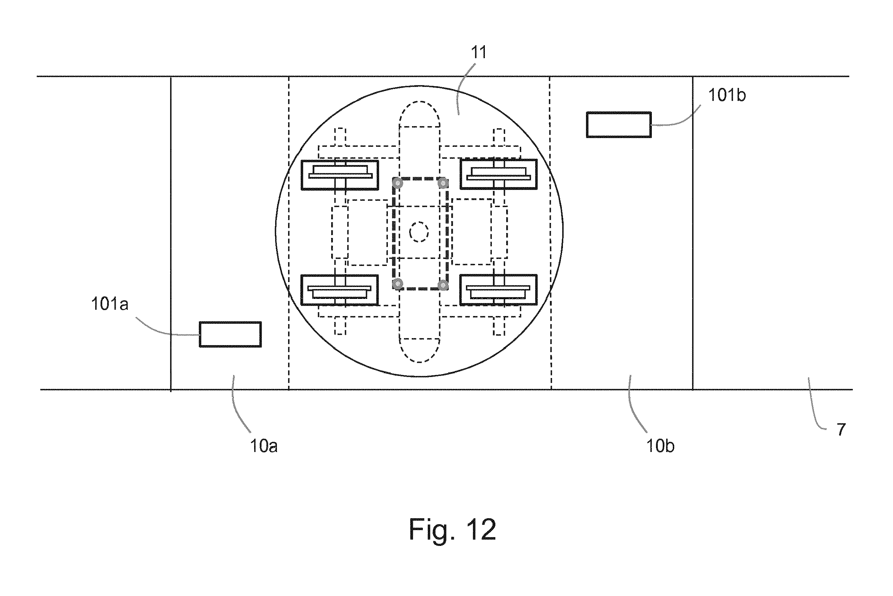

Figure 12 shows a bottom view of a bogie having a third variant enclosure structure. In this case, the bogie is sized relative to the vehicle body such that the central bottom panel 11 can be formed as a circular panel. The first 10a and second 10b bottom panels can thus physically join at opposite sides of the vehicle body, allowing these panels to be formed as a unitary component.

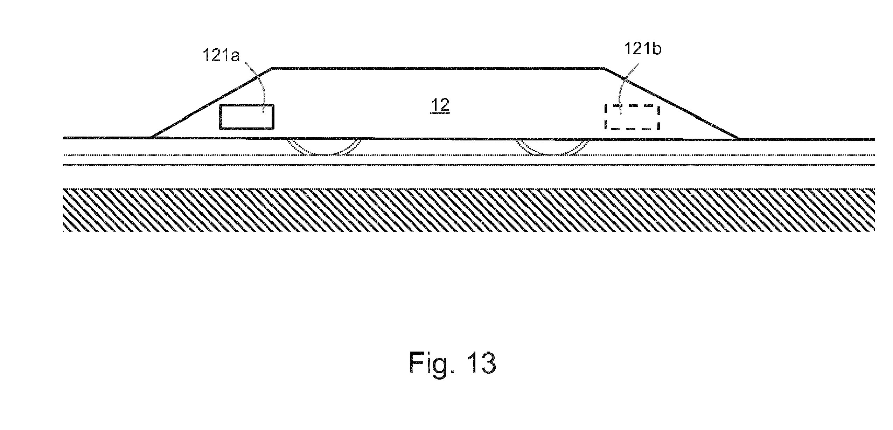

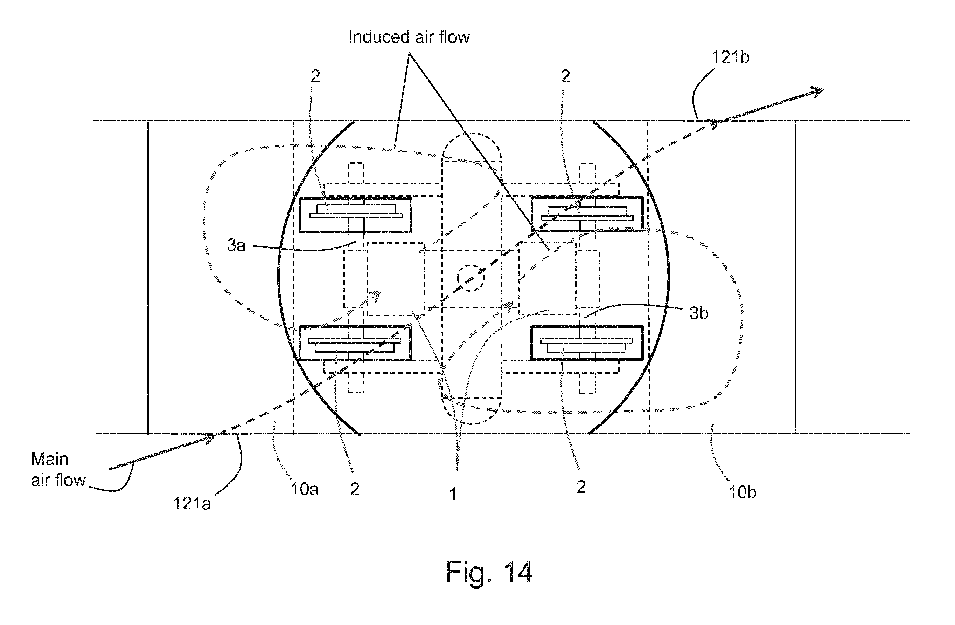

Figure 13 shows a side view of a bogie having a fourth variant enclosure structure, and Figure 14 shows air flows across the bogie on a bottom view thereof. The structure is the same as that of Figures 4 to 9 except that the air holes are formed in the side covers 12 rather than in the bottom cover. For example, one of the air holes 121 a can be formed at one end of one side cover 12, and the other air hole 121 b can be formed at the other end of the other side cover. The air holes 121a, 121b may have respective diffusers. The path of the main air flow according to this variant is still substantially diagonally across the bogie cavity, and the main air flow also induces secondary air flows, similar to those shown in Figure 9. Accordingly the air flows can be effective at cooling the traction motors 1 and axle bearings. However, because the air holes are formed in the side covers 12 instead of the bottom cover, noise produced by the motors and bogie is projected sideways through the holes rather than down onto the track, and is thus less likely to be attenuated.

While the invention has been described in conjunction with the exemplary embodiments described above, many equivalent modifications and variations will be apparent to those skilled in the art when given this disclosure. For example, the air holes may be provided with baffles, such as a covering perforated plates, to reduce noise transmission through the holes. According to another example, the enclosure structure may have additional air holes in the side or the bottom covers for supplementing the air flows or generating further air flows. Accordingly, the exemplary embodiments of the invention set forth above are considered to be illustrative and not limiting. Various changes to the described embodiments may be made without departing from the spirit and scope of the invention.

## Claims

1. A railway vehicle including:
a vehicle body;
a bogie supporting the body and having a bogie frame (4) and wheels (2); and
a bogie enclosure structure which substantially encloses the bogie in a cavity beneath the vehicle body, the enclosure structure having two side covers (12) which cover respective external lateral sides of the bogie, and the enclosure structure further having a bottom cover covering a bottom side of the bogie, wheel holes (111, 111') being formed in the bottom cover for bottom portions of the wheels to project through;
wherein first (101a, 101a', 121 a) and second (101b, 101b', 121 b) air holes are formed in the enclosure structure, the first air hole being located at a forward position, and the second air hole being located at a rearward position, such that forward motion of the vehicle produces a cooling air flow which enters the cavity through the first air hole and exits the cavity through the second air hole.

2. A railway vehicle according to claim 1, wherein the first air hole is located at or adjacent one of the lateral sides of the bogie, and the second air hole is located at or adjacent the other lateral side of the bogie, such that the cooling air flow passes substantially diagonally across the cavity.

3. A railway vehicle according to claim 1 or 2 further including a traction motor (1) for driving the wheels, wherein the traction motor is mounted to the bogie frame such that it is located on or proximal to the path of the cooling air flow through the cavity.

4. A railway vehicle according to any one of the previous claims, wherein the enclosure structure has respective diffusers (9a, 9b) inside the first and second air holes, the diffusers guiding the air flow into and out of the cavity.

5. A railway vehicle according to any one of the previous claims, wherein respective noise-reducing baffles cover the first and second air holes.

6. A railway vehicle according to any one of the previous claims, wherein the first (101a, 101a') and second (101b, 101b') air holes are formed in the bottom cover.

7. A railway vehicle according to any one of the previous claims, wherein the bogie is rotatable relative to the vehicle body, the bottom cover having front (10a) and rear (10b) portions, and further having a central portion (11) in which the wheel holes (111) are formed, the front and rear portions being fixed to the vehicle body, and the central portion being fixed to and rotatable with the bogie such that the central portion rotates relative to the front and rear portions.

8. A railway vehicle according to claim 7 as dependent on claim 6, wherein the first (101 a, 101 a') and second (101 b, 101 b') air holes are respectively formed in the front and rear portions of the bottom cover.

9. A railway vehicle including:
a vehicle body;
a bogie which supports the body and is rotatable relative thereto, the bogie having a bogie frame (4) and wheels (2); and
a bogie enclosure structure which substantially encloses the bogie in a cavity beneath the vehicle body, the enclosure structure having two side covers (12) which cover respective external lateral sides of the bogie, and the enclosure structure further having a bottom cover covering a bottom side of the bogie, wheel holes (111) being formed in the bottom cover for bottom portions of the wheels to project through;
wherein the bottom cover has front (10a) and rear (10b) portions, and further has a central portion (11) in which the wheel holes are formed, the front and rear portions being fixed to the vehicle body, and the central portion being fixed to and rotatable with the bogie such that the central portion rotates relative to the front and rear portions.

10. A railway vehicle according to any one of claims 7 to 9, wherein the central portion adjoins the front and rear portions along respective circular arc boundaries.

11. A railway vehicle according to any one of claims 7 to 10, wherein the central portion is fixed to the bogie at a central part of the bogie frame.

12. A railway vehicle according to any one of claims 7 to 11, wherein the central portion is formed of polymer-matrix fibre-reinforced composite.

## Amended claims

### Amended claims in accordance with Rule 137(2) EPC.

1. A railway vehicle including:
a vehicle body;
a bogie supporting the body and having a bogie frame (4) and wheels (2); and
a bogie enclosure structure which substantially encloses the bogie in a cavity beneath the vehicle body, the enclosure structure having two side covers (12) which cover respective external lateral sides of the bogie, and the enclosure structure further having a bottom cover covering a bottom side of the bogie, wheel holes (111, 111') being formed in the bottom cover for bottom portions of the wheels to project through;
**characterised in that** first (101a, 101a', 121a) and second (101b, 101 b', 121 b) air holes are formed in the bottom cover, the first air hole being located at a forward position, and the second air hole being located at a rearward position, such that forward motion of the vehicle produces a cooling air flow which enters the cavity through the first air hole and exits the cavity through the second air hole.

2. A railway vehicle according to claim 1, wherein the first air hole is located at or adjacent one of the lateral sides of the bogie, and the second air hole is located at or adjacent the other lateral side of the bogie, such that the cooling air flow passes substantially diagonally across the cavity.

3. A railway vehicle according to claim 1 or 2 further including a traction motor (1) for driving the wheels, wherein the traction motor is mounted to the bogie frame such that it is located on or proximal to the path of the cooling air flow through the cavity.

4. A railway vehicle according to any one of the previous claims, wherein the enclosure structure has respective diffusers (9a, 9b) inside the first and second air holes, the diffusers guiding the air flow into and out of the cavity.

5. A railway vehicle according to any one of the previous claims, wherein respective noise-reducing baffles cover the first and second air holes.

6. A railway vehicle according to any one of the previous claims, wherein the bogie is rotatable relative to the vehicle body, the bottom cover having front (10a) and rear (10b) portions, and further having a central portion (11) in which the wheel holes (111) are formed, the front and rear portions being fixed to the vehicle body, and the central portion being fixed to and rotatable with the bogie such that the central portion rotates relative to the front and rear portions.

7. A railway vehicle according to claim 6, wherein the first (101 a, 101 a') and second (101b, 101b') air holes are respectively formed in the front and rear portions of the bottom cover.

8. A railway vehicle according to claim 6 or 7, wherein the central portion adjoins the front and rear portions along respective circular arc boundaries.

9. A railway vehicle according to any one of claims 6 to 8, wherein the central portion is fixed to the bogie at a central part of the bogie frame.

10. A railway vehicle according to any one of claims 6 to 9, wherein the central portion is formed of polymer-matrix fibre-reinforced composite.
